# EUROPEAN PATENT SPECIFICATION

(11) **EP 0 434 092 B1**
(45) Date of publication and mention of the grant of the patent: **21.06.1995**
(21) Application number: 90125234.6
(22) Date of filing: 21.12.1990
(51) Int. Cl.: G05D 7/01

(54) **Flow control valve**
Stromregelventil
Vanne de régulation de débit

(30) Priority: 21.12.1989 JP 333583/89; 08.02.1990 JP 31198/90
(43) Date of publication of application: 26.06.1991
(73) Proprietor: SUMITOMO ELECTRIC INDUSTRIES, LTD., Osaka-shi, Osaka 541 (JP)
(72) Inventor: Hashida, Koichi, c/o Itami Works of Sumitomo, Itami-shi, Hyogo (JP); Takata, Koji, c/o Itami Works of Sumitomo, Itami-shi, Hyogo (JP)
(74) Representative: Glawe, Delfs, Moll & Partner

(56) References cited:
- EP-A- 0 302 264
- DE-A- 2 846 771
- FR-A- 1 312 231
- US-A- 3 113 591
- US-A- 3 115 891
- US-A- 4 458 718
- US-A- 4 876 857
- US-E- 26 647

## Description

This invention related to a flow control valve suitable for use in a high-pressure, small-flow fluid pressure system which operates with an especially low-viscosity hydraulic fluid, such as a brake device for an automobile.

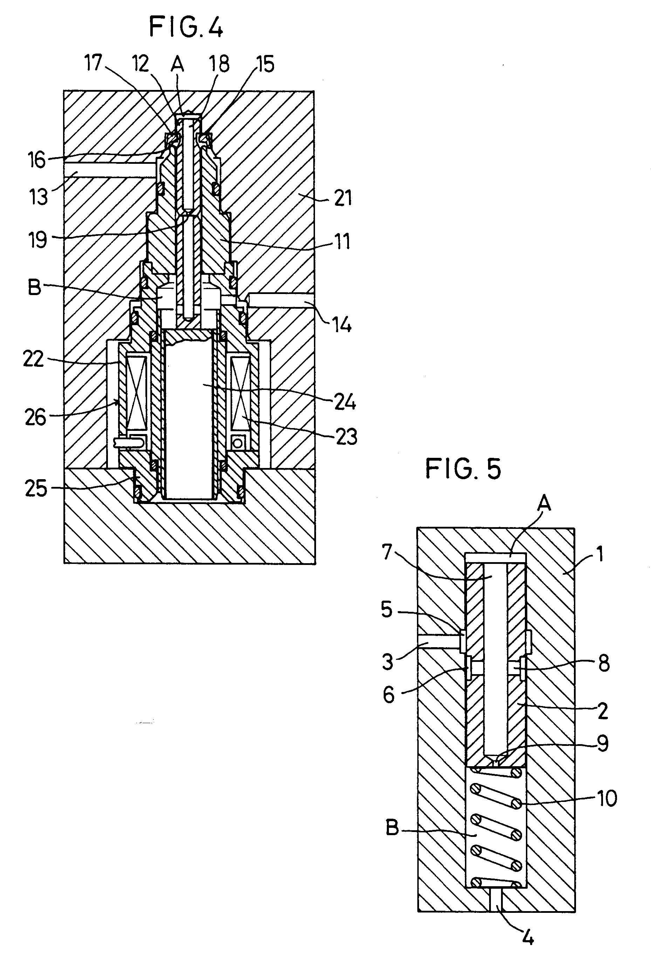

Fig. 5 shows a prior art flow control valve in which a spool 2 is slidably mounted in a sleeve 1.

The sleeve 1 is formed with an inlet port 3 at one side thereof near its top end and with an outlet port 4 in its bottom end. An annular groove 5 is formed in the inner peripheral surface of the sleeve 1 so as to communicate with the inlet port 3 and extend over the entire circumference thereof.

The spool 2 is also formed in its outer periphery with an annular groove 6 extending over the entire circumference thereof. It is further formed with a plurality of radial passages 8 interconnecting the annular groove 6 with a fluid passage 7 extending through the center of the spool 2.

The fluid passage 7 has its top end open and communicates with an upper chamber A formed in the sleeve 1. Its bottom end communicates with a lower chamber B of the sleeve 1 through an orifice 9.

A compression spring 10 as a biasing means is mounted in the lower chamber B in the sleeve 1 to exert an upward force to the spool 2.

In such a conventional fluid control valve, when the fluid pressure differential between both ends of the spool 2 is smaller than a predetermined value, the spool 2 will be pushed up by the spring 10 up to a position where the annular grooves 5 and 6 communicate with each other. Thus in this state, fluid flows from inlet port 3, annular groove 5, annular groove 6, radial passages 8, fluid passage 7, orifice 9 and into the lower chamber B in the sleeve 1 and is discharged through the outlet port 4.

When the pressure of the fluid flowing into the upper chamber A in the sleeve 1 through the inlet port rises and the pressure differential between both ends of the spool 2 increases, the spool 2 will descend compressing the spring 10 under the pressure differential. As a result, the annular groove 6 will move downwards out of communication with the annular groove 5, thus breaking communication between the inlet port 3 and the upper chamber A.

When the inflow of fluid is cut off and the fluid in the upper chamber A begins to flow out through the orifice 9, the spool 2 will be pushed up by the spring 10, regaining communication between the annular grooves 5 and 6.

By repeating this operation, the pressure differential between both ends of the spool 2 will be kept equal to the biasing force of the spring 10 divided by the sectional area of the spool. Thus the flow rate through the orifice 9 will be set at a predetermined value because it is determined by the pressure differential.

If such a conventional flow control valve for the brake device of an automobile is used, since it works in a low-viscosity, high-pressure line, when the annular groove 5 in the sleeve 1 and the annular groove 6 in the spool 2 are displaced from each other, the fluid leakage through a gap formed in the wall separating the grooves 5 and 6 tends to increase to such a degree as not to be negligible. Thus, the displacement between the annular grooves 5 and 6 for the spool to attain a balanced position will grow so large that the position of the spool 2 will be unstable. This makes it necessary to use an urging means having a longer stroke.

Also, due to the fluid leakage, the actual flow rate may deviate from the target flow rate.

On the other hand, if oppositely disposed lateral holes are formed in the sleeve instead of the annular groove to reduce such fluid leakage, though the leakage can be reduced, the unbalanced force acting on the spool 2 in a diametrical direction will increase due to high fluid pressure, making it necessary to use a large-sized spring in order to increase the biasing force.

Further, since the intended flow rate is extremely small, if the biasing force is increased, the orifice will have to be narrowed extremely.

An object of this invention is to provide a flow control valve which can control the flow rate with high accuracy even if used in a high-pressure, low-viscosity, low-flow line.

In order to solve the above problems, according to this invention, as defined in Claim 1, an annular seal is liquid-tightly fitted in the annular groove formed in the sleeve. A sealing portion is formed between this annular seal and a shoulder portion on the spool so that the degree of opening will be freely adjustable and the fluid leakage can be prevented when closed.

With this arrangement, fluid leakage can be prevented through the wall between the annular groove in the sleeve and the one in the spool when they are displaced from each other. Also, no such diametrical unbalanced force would occur as in a structure using lateral holes in place of the annular groove.

Further, the biasing means for exerting a biasing force on the spool may be an electronically and variably controllable one.

According to this invention, the annular seal is fitted in the annular groove formed in the inner periphery of the sleeve, with the inner periphery of this annular seal disposed in the annular groove formed in the outer periphery of the spool. With this arrangement, when the spool is moved by the balance of the differential pressure between both ends of the spool and the biasing means such as springs and electromagnets, the flow control valve can be opened and closed in a controlled manner by bringing the inner periphery of the annular seal and the shoulder portion on the spool into contact with each other and separating them from each other. Thus the flow rate can be controlled with high accuracy even with a high-pressure, low-viscosity, low-flow liquid.

Therefore, this flow control valve can be used advantageously in an electronical control device such as an anti lock control in a brake assembly of an automobile.

Other features and objects of the present invention will become apparent from the following description taken with reference to the accompanying drawings, in which:
Figs. 1 and 2 are vertical sectional side views of the first embodiment of the flow control valve according to this invention in different states;
Fig. 3 is a vertical sectional side view of the second embodiment;
Fig. 4 is a vertical sectional view of the third embodiment; and
Fig. 5 is a vertical sectional view of a prior art flow control valve.

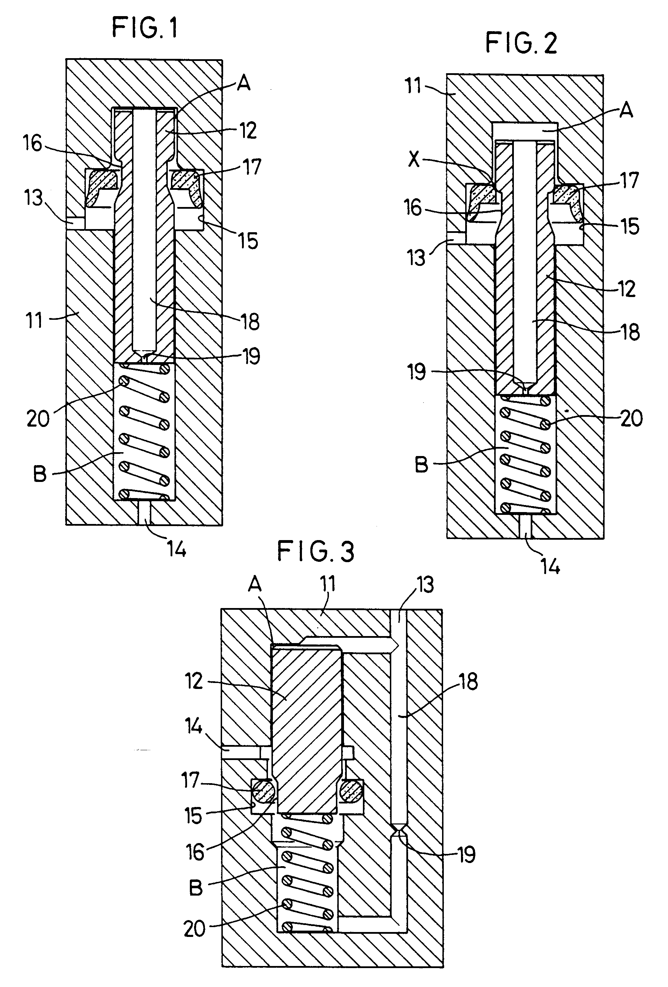

In the embodiment shown in Figs. 1 and 2, a spool 12 is slidably mounted in the sleeve 11.

The sleeve 11 is formed near its top end at one side with an inlet port 13 and in its bottom end with an outlet port 14. Further it is formed in its inner periphery with an annular groove 15 extending over the entire circumference thereof so as to communicate with the inlet port 13.

Also, the spool 12 is formed in its outer periphery with an annular groove 16 extending over the entire circumference thereof. An annular seal 17 made of a soft resilient material is fitted in the annular groove 15 with its inner periphery received in the annular groove 16.

The annular seal 17 is formed around its outer periphery with a downwardly extending peripheral wall and is fitted liquid-tightly in the annular groove 15. When the spool 12 is in its elevated position as shown in Figs. 1, a gap is formed between the inner periphery of the seal 17 and a shoulder portion of the annular groove 16, whereas in its lowered position as shown in Fig. 2, the inner periphery of the seal 17 is pressed against the shoulder portion of the annular groove 16.

A fluid passage 18 is formed in the spool 12. It has a top opening communicating with an upper chamber A in the sleeve 11 and a bottom opening communicating with a lower chamber B through an orifice 19.

The inner periphery of the sleeve 11 has a larger diameter at the portion above the annular groove 15 than the outer periphery of the spool 12, so that when the spool is in its elevated or retracted position (Fig. 1), a groove is formed around the upper part of the spool 12 to connect the annular groove 15 in the sleeve 11 to the upper chamber A and the fluid passage 18.

A compression spring 20 as a biasing means is mounted in the lower chamber B in the sleeve 11 to urge the spool 12 upwardly.

In this arrangement, the differential pressure between both ends of the spool 12, i.e. both ends of the orifice 19, is determined by the force F of the spring 20 and the sectional area S of the spool, so that the flow rate can be kept at a constant value determined by the pressure F/S and the sectional area of the orifice. This will be described more specifically.

Suppose that the inlet pressure is P1, the outlet pressure is P3, and the pressure in the upper chamber A in the spool 12 is P2. When the gap between the spool 12 and the annular seal 17 is open, P1 = P2 > P3 + F/S. Thus the spool 12 will move downwards, closing the opening between the spool and the annular seal (at point X in Fig. 2). In this state, since P2 > P3, the fluid in the upper chamber A will flow through the orifice 19 toward the outlet port 14. Then the spool will move upwardly again, opening the sealing portion at the annular seal 17. This is repeated, thereby keeping the state which satisfies P2 = P3 + F/S. Thus the differential pressure between both ends of the orifice 19 is kept to F/S irrespective of the P1 and P3 values, so that the flow rate through the orifice 19 is kept constant.

Any fluid leakage through the gap between the spool 12 and the sleeve 11 adds to the overall flow rate through the control valve. But such leakage can be reduced to a negligible level by increasing the length of contact between the spool and the sleeve.

Namely, a conventional flow control valve (Fig. 5) was opened and closed making use of the wall portion formed between the groove in the spool and the groove in the sleeve when they are displaced from each other. In this invention, this portion is replaced with the sealing portion on the annular seal 17. With this arrangement, fluid leakage when the valve is in its closed position can be reduced to a negligible degree. This satisfies the requirements of high pressure, low viscosity and low flow rate.

The sleeve 11 of the abovesaid embodiment is shown to be integrally formed. But for manufacturing and assembling purposes, it may be made up of a plurality of separable parts.

Also, a screw for adjusting the spring pressure may be provided so that the pressure of the spring 20 will be adjustable.

The function of the embodiment shown in Figs. 1 and 2 is attainable with the structure shown in Fig. 3 where the inlet port 13 the outlet port 14, the orifice 18 and the effective sealing surface of the annular seal 17 are positioned in reverse relation.

In the embodiment of Figs. 1 and 2 ,the lower one of the pressures at both ends of the spool 12 i.e. at both ends of the orifice 19 is the outlet pressure P3 whereas the higher pressure is P3 + F/S. In Fig. 3, the higher pressure is input pressure P1 whereas the lower pressure is P1 - F/S. In either case, the differential pressure is F/S.

In the embodiment of Figs. 1 and 2, the annular seal 17 has its upstream end communicating with the inlet port 13 and its downstream end communicating with the higher pressure end face of the spool 12 through the gap formed between the outer periphery of the spool 12 and the inner periphery of the sleeve 11. In Fig. 3, the annular seal 17 has its upstream end communicating with the lower pressure end face of the spool 12 and its downstream side communicating with the outlet port 14 through the gap formed between the outer periphery of the spool 12 and the inner periphery of the sleeve 11.

With these features in mind, the structure and operation of the embodiment shown in Fig. 3 will be readily understood since the parts having the same function as those in Figs. 1 and 2 are identified by the same numerals.

Some elements of the embodiment of Fig. 3 slightly differ in design from those of Figs. 1 and 2 showing some examples of possible alternatives. One of such differences is the sectional shape of the annular seal 17. It is required to have the function of sealing the portion between itself and the annular grooves 15 in the sleeve 11 and the function of opening and closing the fluid passage formed between the inner edge portion of the annular groove 15 and the shoulder portion of the spool 12 at the boundary between the outer periphery of the spool 12 and its annular groove 16.

As long as the annular seal 17 has the above two functions, it may have any desired sectional shape and may be made of any desired material. Another difference is the fluid passage 18 including the orifice 19. As long as the fluid passage 18 is provided in such a way as to connect both ends of the spool 12 with each other, it may be provided either in the spool 12 or outside of it.

Fig. 4 shows another embodiment in which the compression spring of the embodiments shown in Figs. 1 and 3 is replaced with an electronically controlled variable biasing means in the form of an electromagnet. This embodiment reflects the structure of the control valve in more practical form.

In this embodiment, a sleeve 11 is mounted in a separate housing 21 and is provided with an annular seal 17.

A frame 22 is mounted in the lower part of the housing 21. A coil 23 and an armature 24 are mounted in the frame 22 with a yoke 25 fixed to the bottom of the frame 22 to form an electromagnet 26.

By passing a current through the coil 23, a magnetic flux will be generated through the armature 24, the frame 22 and the yoke 25. As a result an upward force will act on the armature 24, urging the spool 12 upwardly in the same manner as the spring 20 in Figs. 1 and 2.

Since the biasing force on the spool 12 can be changed freely by changing the current through the coil 23, the flow rate can be adjusted freely by remote control.

## Claims

1. A flow control valve comprising:
a sleeve (11) formed with an inlet port (13), an outlet port (14) and an annular groove (15) in the inner periphery thereof,
a spool (12) slidably and liquid-tightly mounted in said sleeve and having a high-pressure end (A) and a low-pressure end (B),
said spool (12) being formed in the outer periphery thereof with an annular groove (16) having a shoulder portion,
a fluid passage (18) provided with an orifice (19) for connecting said high-pressure end (A) with said low-pressure end (B),
an annular seal (17) liquid-tightly fitted in said annular groove (15) formed in said sleeve (11) and fitted in said annular groove (16) formed in said spool (12) with a gap left therebetween,
a biasing means (20) for biasing said spool (12) in a direction opposite to the fluid pressure differential between said high-pressure end (A) and said low-pressure end (B) of said spool (12),
said annular seal (17) forming, in cooperation with said shoulder portion, a sealing portion for opening and closing fluid communication from said inlet port (13) toward said outlet port (14) through said orifice (19) as said spool (12) moves,
said sealing portion being opened when said fluid pressure differential is smaller than the pressure corresponding to the biasing force of said biasing means (20) and closed when it is larger, whereby said pressure differential is kept equal to the pressure corresponding to said biasing force (20), and the flow rate through said orifice (19) is set equal to the value determined by said pressure differential and the sectional area of said orifice (19) and corresponds to the flow rate between said inlet port (13) and said outlet port (14).

2. A flow control valve as claimed in claim 1, wherein it has a passage extending from said inlet port to said high-pressure end of said spool through said sealing portion between said annular seal and said shoulder portion on said spool and then extending to said outlet port through said fluid passage having said orifice.

3. A flow control valve as claimed in claim 1, wherein it has a passage extending from said inlet port to said low-pressure end of said spool through said fluid passage having said orifice and then extending to said outlet port through said sealing portion formed between said annular seal and said shoulder portion on said spool.

4. A flow control valve as claimed in any of claims 1 - 3, wherein said biasing means is electronically and variably controlled.

## Patentansprüche

1. Flußregelventil mit:
einer Hülse (11), die mit einer Eingangsöffnung (13), einer Ausgangsöffnung (14) und an ihrem Innenumfang mit einer ringförmigen Nut (15) versehen ist;
einem Kolben (12), der verschiebbar und flüssigkeitsdicht in der Hülse montiert ist, und ein Hochdruckende (A) und ein Niedrigdruckende (B) hat,
wobei der Kolben (12) an seinem Außenumfang mit einer Ringnut (16) versehen ist, die einen Schulterabschnitt aufweist;
einen Fluiddurchlaß (18) der mit einer Öffnung (19) versehen ist, um das Hochdruckende (A) mit dem Niedrigdruckende (B) zu verbinden;
einer ringförmigen Dichtung (17), die flüssigkeitsdicht in der in der Hülse (11) ausgebildeten ringförmigen Nut (15) und der im Kolben (12) ausgebildeten ringförmigen Nut (16) eingepaßt ist, wobei dazwischen ein Spalt verbleibt;
einem Vorspannmittel (20) zum Vorspannen des Kolbens (12) in einer Richtung entgegengesetzt zur Fluiddruckdifferenz zwischen dem Hochdruckende (A) und dem Niedrigdruckende (B) des Kolbens (12),
wobei die ringförmige Dichtung (17) zusammen mit dem Schulterabschnitt einen Dichtungsabschnitt zum Öffnen und Schließen der Fluidkommunikation von der Eingangsöffnung (13) zur Ausgangsöffnung (14) über die Öffnung (19) bildet, wenn sich der Kolben (12) bewegt,
wobei der Dichtungsabschnitt geöffnet wird, wenn das Fluiddruckdifferenz kleiner als der Druck entsprechend der Vorspannkraft des Vorspannmittels (20) ist, und geschlossen wird, wenn er größer ist, wodurch die Druckdifferenz gleich dem Druck entsprechend der Vorspannkraft (20) gehalten wird und die Flußrate durch die Öffnung (19) so eingestellt ist, daß sie gleich dem Wert ist, der durch die Druckdifferenz und die Querschnittsfläche der Öffnung (19) bestimmt ist und der Flußrate zwischen der Eingangsöffnung (13) und der Ausgangsöffnung (14) entspricht.

2. Flußregelventil nach Anspruch 1, wobei es einen Durchlaß aufweist, der sich von der Eingangsöffnung zum Hochdruckende des Kolbens durch den Dichtungsabschnitt zwischen der ringförmigen Dichtung und dem Schulterabschnitt am Kolben erstreckt und dann weiter zur Ausgangsöffnung durch den Fluiddurchlaß mit der Öffnung führt.

3. Flußregelventil nach Anspruch 1, wobei es einen Durchlaß aufweist, der sich von der Eingangsöffnung zum Niedrigdruckende des Kolbens durch den Fluiddurchlaß mit der Öffnung erstreckt und dann durch den Dichtungsabschnitt, der zwischen ringförmiger Dichtung und dem Schulterabschnitt am Kolben gebildet ist, zur Ausgangsöffnung führt.

4. Flußregelventil nach einem der Ansprüche 1 bis 3, wobei die Vorspannmittel elektronisch und variabel gesteuert werden.

## Revendications

1. Vanne de commande de débit comprenant:
un manchon (11) formé avec une ouverture d'entrée (13), une ouverture de sortie (14) et une rainure annulaire (15) à la périphérie interne de ce-dernier,
un piston (12) monté à glissement et à l'étanchéité au liquide dans ledit manchon (12), et avec une extrémité à haute pression (A) et une extrémité à basse pression (B),
ledit piston (12) étant formé à sa périphérie externe avec une rainure annulaire (16) ayant une partie d'épaulement,
un passage de fluide (18) pourvu d'un orifice (19) pour relier ladite extrémité à haute pression (A) à ladite extrémité à basse pression (B),
un joint d'étanchéité annulaire (17) insérée a l'étanchéité au liquide dans ladite rainure annulaire (15) formée dans ledit manchon (11) et insérée dans ladite rainure annulaire (16) formée dans ledit piston (12) avec un écartement entre ces-derniers,
un moyen de chargement préliminaire (20) pour charger initialement ledit piston (12) en sens opposé à la différence de pression de fluide entre ladite extrémité à haute pression (A) et ladite extrémité à basse pression (B) dudit piston (12),
ledit joint d'étanchéité annulaire (17) formant, en coopération avec ladite partie d'épaulement, une partie d'étanchéité pour ouvrir et fermer la communication de fluide à partir de ladite ouverture d'entrée (13) vers ladite ouverture de sortie (14) à travers ledit orifice (19) lorsque ledit piston (12) se déplace,
ladite partie d'étanchéité étant ouverte lorsque ladite différence de pression de fluide est inférieure à la pression correspondant à ladite force de chargement initial dudit moyen de chargement préliminaire (20) et fermée lorsqu'elle est supérieure à cette-dernière, en maintenant ladite différence de pression à un niveau égal à la pression correspondant à ladite force de chargement initial (20), et le débit à travers ledit orifice (19) est réglé à une valeur égale à la valeur déterminée par ladite différence de pression ainsi que la superficie de la section dudit orifice (19) et correspond au débit entre ladite ouverture d'entrée (13) et ladite ouverture de sortie (14).

2. Vanne de commande de débit selon la revendication 1, comprenant un passage s'étendant de ladite ouverture d'entrée vers ladite extrémité à haute pression dudit piston à travers ladite partie d'étanchéité entre ledit joint d'étanchéité annulaire et ladite partie d'épaulement sur ledit piston et puis s'étendant vers ladite ouverture de sortie à travers ledit passage de fluide ayant ledit orifice.

3. Vanne de commande de débit selon la revendication 1, comprenant un passage s'étendant de ladite ouverture d'entrée vers ladite extrémité à basse pression dudit piston à travers ledit passage de fluide ayant ledit orifice et puis s'étendant vers ladite ouverture de sortie à travers ladite partie d'étanchéité formée entre ledit joint d'étanchéité annulaire et ladite partie d'épaulement sur ledit piston.

4. Vanne de commande de débit selon l'une quelconque des revendications 1 - 3, dans laquelle ledit moyen de chargement préliminaire est à commande électronique et variable.
